# FASCICULE DE BREVET EUROPEEN

(11) **EP 3 856 553 B1**
(45) Date de publication et mention de la délivrance du brevet: **19.10.2022**
(21) Numéro de dépôt: 19794619.7
(22) Date de dépôt: 25.09.2019
(51) Int. Cl.: B60H 1/00, B60H 1/34

(54) **AERATEUR DE VEHICULE AUTOMOBILE, DISPOSITIF ET PROCEDE DE GESTION THERMIQUE UTILISANT UN TEL AERATEUR DE VEHICULE AUTOMOBILE**
KRAFTFAHRZEUG-LUFTAUSSTRÖMER, WÄRMEVERWALTUNGSVORRICHTUNG UND VERFAHREN MIT VERWENDUNG SOLCHEN KRAFTFAHRZEUG-LUFTAUSSTRÖMERS
MOTOR VEHICLE AIR-DIFFUSER, THERMAL MANAGEMENT DEVICE AND METHOD USING SUCH A MOTOR VEHICLE AIR-DIFFUSER

(30) Priorité: 27.09.2018 FR 1858849
(43) Date de publication de la demande: 04.08.2021
(73) Titulaire: VALEO SYSTEMES THERMIQUES, 78320 Le Mesnil Saint-Denis (FR)
(72) Inventeur: DE PELSEMAEKER, Georges, 78322 Le Mesnil Saint Denis Cedex (FR); NEVEU, Daniel, 78322 Le Mesnil Saint-denis Cedex (FR); TREVALINET, Lucas, 80517 Le Mesnil Saint Denis Cedex (FR); BOUBAKER, Mohamed-Amine, 78322 Le Mesnil Saint Denis Cedex (FR)
(74) Mandataire: Valeo Systèmes Thermiques
(86) Numéro de dépôt international: PCT/FR2019/052244
(87) Numéro de publication internationale: WO 2020/065205

(56) Documents cités:
- EP-A1- 3 604 004
- EP-A2- 1 454 780
- FR-A1- 2 784 625
- FR-A1- 2 886 385
- GB-A- 520 452
- KR-A- 20030 041 343

## Description

La présente invention concerne un aérateur de véhicule automobile, pour ventiler l'habitacle d'un véhicule automobile, notamment dans le cadre d'une gestion thermique dudit habitacle.

Les modules de gestion thermique usuels de véhicule comportent généralement une soufflerie d'air, couplée à un circuit de gestion thermique comportant des éléments de conditionnement thermique tels que des compresseurs, évaporateurs, échangeurs et résistances chauffantes. Une pluralité d'aérateurs répartis dans l'habitacle injectent alors l'air mis en mouvement par la soufflerie et refroidi par le générateur de froid en divers points de l'habitacle (console centrale, pieds des occupants, plafonnier etc.).

Ces modules de gestion thermique, fonctionnant en refroidissement, ont une puissance importante, générant un débit d'air de 150 à 450 kg/h refroidi à des températures de l'ordre de 4 à 5°C. Les aérateurs, qui se présentent sous formes de grilles à persiennes et lamelles de guidage, émettent un flux diffus, large, uniforme et à vitesse d'écoulement réduite. Les modules de gestion thermique visent souvent à refroidir uniformément la totalité de l'habitacle du véhicule.

La puissance de gestion thermique est ainsi uniforme quelle que soit la taille, la position et la corpulence de l'occupant. La seule personnalisation possible est effectuée par orientation des lamelles de guidage des aérateurs, avec ou sans ouverture d'une fenêtre, et par contrôle de débits dans un mélangeur où l'air issu du module de gestion thermique.

L'habitacle du véhicule présente une inertie thermique importante, et des espaces dans lesquels les occupants ne se trouvent pas doivent être aussi refroidis, tandis que des points chauds tels que des parties du corps de l'occupant exposés au soleil ne sont pas spécifiquement refroidis. Le confort ressenti est ainsi réduit.

Pendant plusieurs dizaines de secondes à plusieurs minutes, un utilisateur ne ressent donc que partiellement ou pas du tout le refroidissement ou la chaleur fournis par le module de gestion thermique.

En outre, pour un ressenti de fraîcheur optimal et rapide, différentes parties du corps du conducteur ou passager devraient être refroidies en priorité, avec une adaptation de puissance, notamment selon si elles sont recouvertes par des vêtements ou non. La tête, le visage ainsi que les mains sont des parties du corps généralement dénudées, présentant une surface d'échange et une vascularisation importante, et constituent ainsi des portions du corps dont le rafraîchissement est immédiatement ressenti.

De même pour une sensation de réchauffement optimale et rapide, les mains et le visage devraient être réchauffés en priorité.

En outre, le fait que le flux d'air conditionné sorte par des grilles statiques une fois la direction réglée ne permet d'adapter que de façon limitée la sensation de fraîcheur à l'occupant du véhicule, sa morphologie, sa taille et sa position dans l'habitacle.

Des exemples sont divulgués par: GB520452, KR20030041343 et FR2784625.

Afin de résoudre au moins partiellement le problème précédemment mentionné, l'invention a pour objet un aérateur d'habitacle de véhicule automobile, destiné à délivrer un flux d'air en direction d'un espace à conditionner, comportant
- une ouverture, par laquelle peut s'écouler un flux d'air lors du fonctionnement,
- une surface de guidage évasée, s'étendant à partir de l'ouverture, évasée dans la direction d'écoulement du flux d'air,
- un pointeau comportant une tête de pointeau avec :
   o une pointe située à l'extrémité du pointeau,
   o une portion de largeur maximale de forme correspondante à l'ouverture, avec des dimensions comprises entre 80% et 100% de celles de l'ouverture,
   o une base évasée dans le sens d'écoulement reliant la tête à un corps allongé,
le pointeau étant mobile en translation entre deux positions extrémales dont :
- une position extrémale déployée dans laquelle la portion la plus large de la tête pointeau est en aval de l'ouverture en direction de l'espace à conditionner, le flux d'air étant alors laminaire et guidé par la surface de guidage en flux divergent,
- une position extrémale rétractée dans laquelle la portion la plus large de la tête du pointeau est en amont de l'ouverture, le flux d'air étant alors laminaire et guidé par la pointe du pointeau en flux convergent.

Un tel aérateur permet de cibler le flux d'air sur différentes parties du corps de l'occupant du véhicule.

L'aérateur peut en outre présenter une ou plusieurs des caractéristiques suivantes, prises seules ou en combinaison.

L'ouverture peut être circulaire, et la tête de pointeau présenter une section longitudinale en losange ou en diamant et être invariante par rotation, un sommet de sa section formant la pointe, et deux sommets adjacents au sommet formant la pointe correspondant à la portion la plus large et la surface de guidage et la base évasée sont tronconiques.

La surface de guidage peut être réalisée sous forme de bourrelet annulaire à une extrémité d'un canal extrémal portant l'ouverture.

L'aérateur peut comporter une conduite d'air, fixe par rapport à l'espace à conditionner et par laquelle arrive de l'air conditionné, et en ce qu'il comporte une articulation permettant d'incliner l'ouverture et le pointeau par rapport à la conduite d'air.

Il peut comporter en outre :
- un mécanisme d'orientation contrôlant l'articulation entre la conduite d'air et l'ouverture,
- un moteur d'orientation, relié au mécanisme d'orientation, modifiant, lorsqu'actionné, l'inclinaison relative de l'ouverture par rapport à la conduite d'air.

Il peut comporter en outre :
- un mécanisme de translation du pointeau, contrôlant la translation du pointeau entre ses positions extrémales,
- un moteur de translation du pointeau relié au mécanisme de translation du pointeau, modifiant, lorsqu'actionné, la position en translation du pointeau.

Le mécanisme de translation du pointeau peut comporter une vis sans fin, et le moteur de translation du pointeau être un moteur rotatif.

Le moteur d'orientation de l'aérateur et le moteur de translation du pointeau peuvent être des moteurs électriques pas-à-pas.

L'invention se rapporte aussi au module de gestion thermique de véhicule automobile associé comportant :
- une conduite d'air, reliée à un système de gestion thermique du véhicule, dans laquelle ledit système de gestion thermique émet un flux d'air conditionné,
- un aérateur tel que précédemment décrit.

Le module de gestion thermique de véhicule automobile peut alors comporter :
- une soufflerie, créant, lorsqu'activée, un flux d'air dans une conduite d'air et comportant une entrée d'air à partir de laquelle de l'air formant le flux d'air est prélevé,
- un conditionneur thermique, disposé au niveau de la conduite d'air pour le conditionnement thermique du flux d'air généré par la soufflerie,
- un aérateur tel que précédemment décrit, disposé à l'extrémité de la conduite d'air par lequel le flux d'air conditionné est émis en direction d'un habitacle du véhicule.

Le conditionneur thermique peut comporter des cellules thermoélectriques à effet Peltier et/ou au moins une résistance chauffante.

La soufflerie peut avantageusement être configurée pour générer un flux d'air de 0 à 50kg/h.

Le conditionneur thermique peut avantageusement être configuré pour refroidir le flux d'air sortant à une température comprise entre 5 et 15°C.

Le module de gestion thermique peut comporter en outre :
- un mécanisme d'orientation de l'aérateur, contrôlant une articulation entre la conduite d'air et l'aérateur,
- au moins un moteur d'orientation de l'aérateur, dont l'actionnement modifie l'orientation de l'aérateur par rapport à la conduite d'air,

- un mécanisme de translation du pointeau, contrôlant la translation du pointeau entre ses positions extrémales,
- un moteur de translation du pointeau relié au mécanisme de translation du pointeau, modifiant, lorsqu'actionné, la position en translation du pointeau,
- une unité de contrôle contrôlant l'actionnement des moteurs d'orientation de l'aérateur et de translation du pointeau.

L'invention concerne aussi un système de gestion thermique de véhicule automobile comportant :
- au moins un module de gestion thermique tel que précédemment décrit,
- au moins un capteur d'une grandeur relative à un état thermique d'au moins une partie du corps d'un occupant du véhicule,
- une unité de contrôle, reliée à l'au moins un capteur, contrôlant :
   ▪ la soufflerie pour modifier le débit du flux d'air,
   ▪ le conditionneur thermique pour modifier la température du flux d'air,
   ▪ le moteur d'orientation de l'aérateur pour modifier l'orientation du flux d'air et
   ▪ le moteur de translation du pointeau pour modifier la forme du flux d'air émis,
   afin de générer et diriger un flux d'air avec un débit et une forme de flux adaptés en fonction de l'au moins une grandeur estimée par le capteur.

Dans ledit système de gestion thermique l'unité de contrôle actionne le moteur de translation du pointeau pour pouvoir basculer le pointeau entre différentes positions intermédiaires entre les positions extrémales comportant au moins une parmi les suivantes :
- une position de flux divergent fin, où le pointeau est rétracté par rapport à la position extrémale, dans laquelle la portion la plus large de la tête de pointeau est en aval de l'ouverture,
- une position de flux conique turbulent, dans laquelle la portion la plus large de la tête de pointeau est au niveau longitudinal de l'ouverture,
- une position de flux convergent fin, où le pointeau est situé en direction de la position extrémale déployée par rapport à la position extrémale rétractée et dans laquelle la portion la plus large de la tête de pointeau est en amont de l'ouverture.

Le capteur peut comporter au moins une caméra infra-rouge dont le champ de vision est dirigé vers une position attendue de l'utilisateur.

L'unité de contrôle peut être configurée pour générer un profil thermique de l'occupant et pour actionner la soufflerie, le conditionneur thermique, les moteurs d'orientation de l'aérateur et/ou de translation du pointeau en fonction du profil thermique généré, le profil thermique comprenant au moins un paramètre ou grandeur parmi les suivants : la présence d'au moins un occupant, la position du au moins un occupant, la taille du ou des occupants, la position de parties du corps du au moins un occupant, la température de parties du corps du au moins un occupant, la température en différents points de l'habitacle, la présence de rayonnement solaire incident dans l'habitacle ou sur au moins une partie du corps du au moins un occupant, la température extérieure, l'état ouvert ou fermé d'ouvrants ou de fenêtres du véhicule, la position du siège d'au moins un occupant.

Enfin, l'invention concerne aussi un procédé de commande de système de gestion thermique de véhicule automobile tel que précédemment décrit, comportant les étapes :
- détection de la position de la tête d'un occupant du véhicule,
- actionnement du moteur d'orientation de l'aérateur pour faire osciller l'orientation de l'aérateur entre une position supérieure où le flux d'air est orienté vers la tête de l'occupant et une position inférieure, dans laquelle le flux d'air est orienté vers le torse ou le bassin de l'occupant.

Le procédé peut comporter en outre les étapes :
- prélèvement d'images à partir d'une caméra infra-rouge et/ou collecte de données à partir des capteurs,
- génération d'un profil thermique d'un occupant du véhicule au moyen des images de la caméra thermique et des données des capteurs,
- détection de points chauds dans le profil thermique de l'occupant du véhicule,
- actionnement du moteur d'orientation de l'aérateur (45) pour décrire des oscillations réduites autour des points chauds détectés avec le pointeau dans une position rétractée où la portion la plus large de la tête de pointeau est en amont de l'ouverture pour générer un flux d'air convergent.

Dans ledit procédé de commande l'étape de détermination du profil thermique de l'occupant peut comporter une étape d'estimation des dimensions et de la position d'au moins une partie du corps de l'occupant, et en ce qu'il comporte une étape d'adaptation de la direction et de la position du pointeau aux dimensions et à la position estimées de la ou des parties du corps de l'occupant par actionnement des moteurs d'orientation de l'aérateur et de translation du pointeau.

L'étape de détermination du profil thermique de l'occupant peut comporter une étape de localisation et d'estimation des dimensions de la position de la tête et des mains de l'occupant, et des oscillations réduites peuvent alors être décrites autour de la tête et des mains de l'occupant avec le pointeau dans la position rétractée où la portion la plus large de la tête de pointeau est en amont de l'ouverture pour générer un flux d'air convergent.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre schématiquement un habitacle de véhicule, avec un module de gestion thermique,
- la figure 2 montre plus en détail le système de gestion thermique selon un premier mode de réalisation de l'invention,
- la figure 3 montre en perspective un module de gestion thermique du système des figures 1 et 2,
- la figure 4 est une vue en coupe schématique du module de la figure 3,
- les figures 5 et 6 sont des vues en coupe de l'aérateur du module des figures 3 et 4, en coupe partielle,
- les figures 7 à 11 sont des vues en coupe schématique de l'aérateur avec un pointeau en différentes positions pour générer des formes de flux d'air différentes,
- la figure 12 est un organigramme illustrant un procédé de commande du système de gestion thermique,
- la figure 13 illustre un mode de réalisation de système et de procédé de commande alternatif pour un système de gestion thermique selon l'invention.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

Les termes tels que "premier" et "deuxième" utilisés plus bas sont donnés pour un simple référencement sans indiquer de préférence ou d'ordre de montage particulier.

Un certain nombre de qualificatifs de position tels que "en amont" ou "en aval", etc. sont aussi utilisés en lien avec les figures. Ces qualificatifs sont définis, en l'absence d'autre précision, en fonction de l'écoulement d'air, à partir d'une prise d'air ou soufflerie (amont), en direction de l'habitacle où se trouve un occupant (aval).

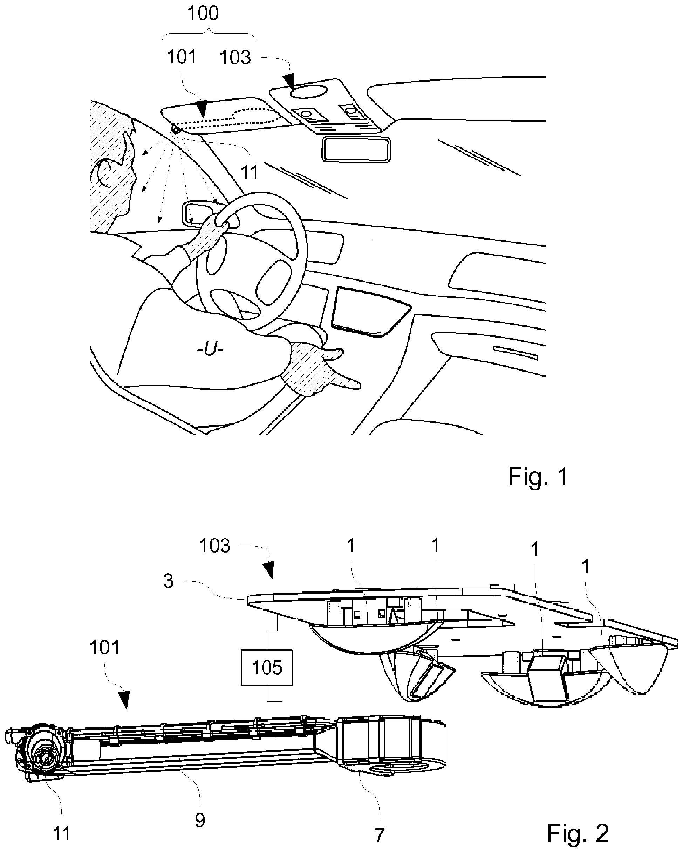

La figure 1 représente schématiquement un habitacle de véhicule, avec un occupant U (ici en particulier le conducteur) du véhicule, assis dans un siège.

Un système de gestion thermique 100 produit et dirige un flux d'air (sommairement représenté par des flèches pointillées) en direction de parties du corps spécifique de l'occupant U du véhicule, ici en particulier sa tête et ses épaules. Ce système de gestion thermique 100 est en particulier intégré dans un plafond de l'habitacle du véhicule, au niveau de rabats pare-soleil.

Le système de gestion thermique 100 comporte un module de gestion thermique 101 et un module de détection 103. Ces éléments sont représentés hors du plafond de l'habitacle du véhicule en figure 2. En particulier, un seul module de gestion thermique 101 est représenté en figure 2, mais le système de gestion thermique 100 peut comprendre plusieurs modules 101, avec en particulier au moins un module de gestion thermique 101 assigné à chaque occupant U du véhicule.

Le module de détection 103, représenté hors de l'habitacle en figure 2, comporte une pluralité de capteurs 1, disposées sur un support 3, et dirigés vers des positions attendues des occupants U du véhicule, ici par exemple le conducteur et/ou le passager du véhicule.

Les capteurs 1 peuvent notamment comprendre des caméras, en particulier des caméras infra-rouge, et prennent des images dans le domaine infra-rouge. Les capteurs 1 sont en particulier dirigés vers les positions attendues des occupants du véhicule : siège conducteur, siège passager, banquette arrière etc. En particulier une ou plusieurs caméras très grand angle (en particulier de type "fisheye" ou "œil de poisson" en français) peuvent couvrir plusieurs positions de façon simultanée.

Une unité de contrôle 105 établit un profil thermique du ou des occupants U, à partir des images prises par la ou les caméras. Ledit profil thermique comprend notamment tous les paramètres et grandeurs influant sur l'état et le ressenti thermique du ou des occupants.

Le module de détection 103 est notamment disposé au niveau du plafonnier du véhicule, et peut être dissimulé à la vue de l'occupant U en étant recouvert par un cache opaque au domaine spectral visible, mais transparent au rayonnement utilisé par les capteurs 1 (infra rouges, ondes radio, etc.)

L'unité de contrôle 105 comporte en particulier des connexions aux capteurs 1 du système de gestion thermique 100, et à d'autres capteurs du véhicules, tels que des capteurs d'état ouvert ou fermé de fenêtres ou d'ouvrant (portières, toit ouvrant etc.) du véhicule.

Pour établir le profil thermique, l'unité de contrôle 105 peut par exemple estimer : la présence ou l'absence du ou des occupants U, leur position, leur taille, la position et la température de parties de leur corps (notamment de leur tête et de leurs mains, hachurées en figure 1), la température en différents points de l'habitacle, la présence de rayonnement solaire incident dans l'habitacle ou sur une partie précise du corps des occupants, la température extérieure, et éventuellement l'état ouvert ou fermé d'ouvrants ou de fenêtres du véhicule et la position des sièges dans l'habitacle.

Pour estimer la position dans l'espace de différentes parties du corps du ou des occupants U, les capteurs 1 peuvent notamment comprendre des caméras établissant une image stéréoscopique du ou des occupants U, des émetteurs de lumière structurée ou des caméras tridimensionnelles à temps de vol ("3D ToF" pour "three dimensional time of flight" en anglais), des émetteurs/récepteurs ultrasons, un lidar ou des capteurs capacitifs. En outre, les capteurs peuvent comporter des thermomètres placés en différents points de l'habitacle, des capteurs de pression intégrés aux sièges (utilisés notamment dans le cadre de la détection de passagers non-attachés).

Une partie au moins des capteurs peut être partagée avec d'autres organes du véhicule tels qu'une interface à détection de gestes, une unité de détection de fatigue et de niveau d'attention du conducteur etc.

L'unité de contrôle 105 comporte en particulier une unité de mémoire et des moyens de calcul pour stocker les images et paramètres mesurés ou estimés par les capteurs et établir à partir de ceux-ci un profil thermique. Cette unité de mémoire et les moyens de calcul peuvent notamment être partagés dans le cadre d'une électronique de bord du véhicule contrôlant d'autres organes du véhicule, ou bien situés dans un module logique dédié.

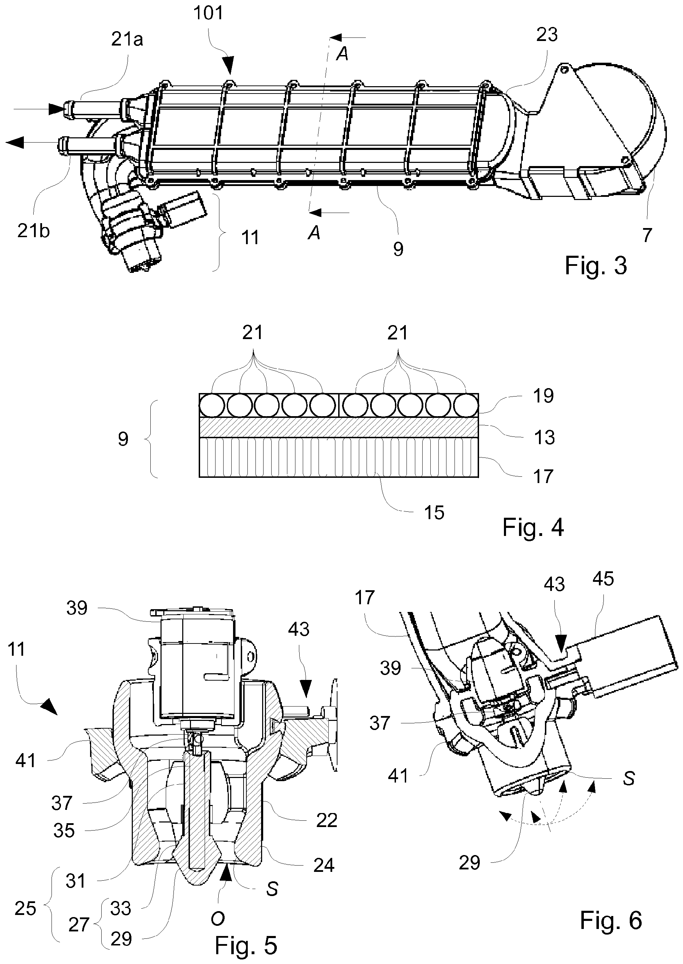

Le module de gestion thermique 101 est montré séparément en figure 3. Ledit module de gestion thermique 101 comporte notamment une soufflerie 7, un conditionneur thermique 9, et un aérateur 11 par lequel le flux d'air, mis en mouvement par la soufflerie 7 et conditionné par le conditionneur thermique 9 est émis dans l'habitacle.

La soufflerie 7 peut notamment comporter un ventilateur à pales, qui aspire de l'air depuis une prise d'air reliée soit à une prise d'air extérieur, soit à une prise d'air située dans l'habitacle. En particulier, la provenance de l'air en entrée de la soufflerie 7 peut être sélectionnée au moyen de clapets et volets, soit automatiquement par l'unité de contrôle 105 soit par un occupant U du véhicule à partir d'une touche "air recyclé" généralement présente dans les véhicules et permettant de sélectionner la provenance de l'air des dispositifs de gestion thermique connus.

En particulier, la soufflerie peut générer un débit de l'ordre de 0 à 50kg/h, inférieur au débit des dispositifs connus, et ainsi plus économique.

Le conditionneur thermique 9 comporte ici un dispositif de refroidissement à effet Peltier, comportant une multitude de cellules thermoélectriques à effet Peltier, qui présentent des cellules froides au niveau desquelles l'air issu de la soufflerie 7 est circulé.

La figure 4 est une vue en coupe transversale schématique du conditionneur thermique 9, selon l'axe transverse A-A illustrant sommairement son fonctionnement.

Le conditionneur thermique 9 comporte des cellules Peltier 13 dont la face froide est en contact thermique avec des ailettes 15. Les ailettes 15 sont disposées longitudinalement dans une conduite d'air 17 reliant la sortie de la soufflerie et l'aérateur 11. Les ailettes 15 peuvent notamment être métalliques, ou en matériau à forte conductivité thermique.

La face chaude des cellules Peltier 13 est en contact thermique avec un échangeur thermique 19 de fluide caloporteur, comportant une pluralité de conduites 21 de fluide caloporteur extrudées, dont une entrée 21a et une sortie 21b sont visibles en figure 3. L'échangeur thermique 19 est en particulier relié à un système de gestion thermique du véhicule. Un coude 23, situé à l'opposé de l'entrée 21a et de la sortie 21b du circulateur 19 assure une circulation retour dans une partie des conduites 21.

Les cellules Peltier 13 extraient ainsi de la chaleur du flux d'air à partir de leurs faces froides. Cette chaleur, qui s'accumule au niveau des faces chaudes desdites cellules Peltier 13 est récupérée par le fluide caloporteur de l'échangeur thermique 19 puis évacuée par le système de gestion thermique du véhicule vers l'extérieur, par exemple au moyen d'un radiateur et d'une ventilation associée.

Dans le cadre d'une utilisation du système de gestion thermique en chauffage, le conditionneur thermique 9 peut notamment comporter des résistances électriques. En alternative, les cellules Peltier 13 peuvent être réversibles, les ailettes étant alors en contact avec leur face chaude.

Le conditionneur thermique 9 peut aussi comporter des dispositifs de contrôle de l'humidité (humidificateurs et/ou déshumidificateurs, nébuliseurs), contribuant à rendre l'air conditionné plus agréable et éventuellement à renforcer la sensation de fraîcheur.

L'utilisation de cellules Peltier et de résistances électriques dans un module de gestion thermique 101 de dimensions réduites diminue l'inertie thermique du dispositif de génération du flux d'air, qui est en conséquence plus rapidement frais ou chaud.

Le conditionneur thermique 9, lorsqu'utilisé en gestion thermique refroidissante est en particulier dimensionné pour fournir un flux d'air d'une température comprise en 5 et 15°C, et plus particulièrement entre 7 et 12°C, autour de 10°C. Ces températures sont supérieures à celles des modules de gestion thermique connus, qui refroidissent le flux d'air à 4 à 5°C, ce qui, en combinaison avec le débit réduit du flux d'air, contribue à rendre le système de gestion thermique plus performant énergétiquement.

A l'extrémité de la conduite d'air 17 opposée à la soufflerie 7 se trouve l'aérateur 11. Ledit aérateur 11 est montré plus en détail et en coupe figure 5. La figure 6 est une vue en coupe partielle de la portion avant de l'aérateur 11.

L'aérateur 11 comporte une ouverture O, par laquelle le flux d'air arrivant par la conduite d'air 17 est émis. L'ouverture O située à l'extrémité d'un tube extrémal 22 prolongeant la conduite d'air 17, est en particulier circulaire, et les différents composants de l'aérateur 11 présentent une relative invariance par rotation, de même que le flux d'air produit. Pour la mise en forme du flux d'air, l'aérateur 11 comporte un pointeau 25, disposé dans l'ouverture O. L'ouverture O est disposée relativement au centre d'une surface de guidage S évasée dans la direction du flux d'air.

La surface de guidage S évasée est ici obtenue par addition d'un bourrelet annulaire 24 à l'extrémité libre du tube extrémal 22. En alternative, elle peut être tronconique.

Le pointeau 25 est perpendiculaire à l'ouverture O, et disposé au centre de celle-ci. Il comporte une tête de pointeau 27, comportant à son extrémité libre une pointe 29 conique, ici arrondie, et un corps allongé 31 tubulaire. La tête de pointeau 27 comporte une base évasée 33 dans le sens d'écoulement du flux d'air, ici tronconique, qui la relie au corps allongé 31 du pointeau 25.

La base évasée 33 et la pointe 29 donnent à la tête de pointeau 27 une section longitudinale en losange ou diamant. La pointe 29 est alors formée par un sommet de ladite section en losange ou en diamant, et deux sommets adjacents au sommet formant la pointe 29 correspondent à la portion la plus large de la tête de pointeau 27.

La portion de largeur maximale (ici la transition entre la base évasée 33 et la pointe 29) est de forme correspondante à l'ouverture O, avec des dimensions comprises entre 80% et 100% de celles de l'ouverture O, en particulier entre 90 et 95% de ces dimensions.

Le corps de pointeau 31 est fixe en rotation et libre en translation axiale par rapport au tube extrémal 22.

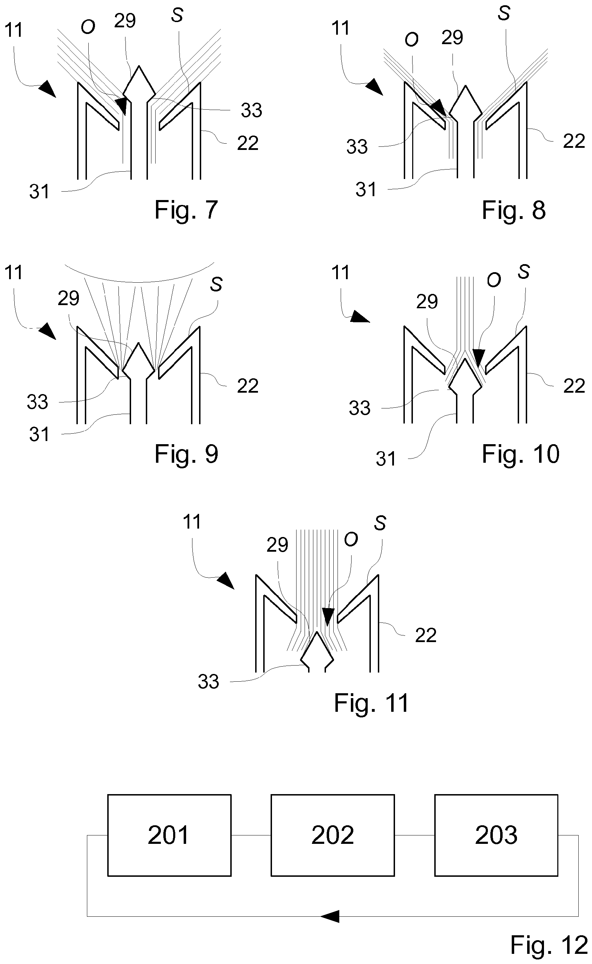

L'extrémité de la vis tubulaire 25 est reliée par un joint de cardan 37 à un moteur de translation du pointeau 39, dont l'actionnement déplace, en faisant tourner la vis tubulaire, le pointeau 25 entre deux positions extrémales dont :
- une position extrémale déployée (voir figure 7) dans laquelle la portion la plus large de la tête de pointeau 27 est en aval de l'ouverture O en direction de l'habitacle,
- une position extrémale rétractée (figure 12) dans laquelle la portion la plus large de la tête de pointeau 27 est en amont de l'ouverture O.

Le corps de pointeau 31 est creux, et comporte en son centre un perçage tubulaire parallèle à son axe longitudinal, alésé ou recouvert d'un pas de vis. Une vis tubulaire 35 est insérée dans ledit perçage tubulaire, avec un pas de vis ou alésage correspondant et en prise de force avec celui du perçage tubulaire. Le perçage central et la vis cylindrique 35 forment ainsi une vis sans fin et un trou taraudé.

Un mode de réalisation alternatif, non représenté, prévoit une biellette dont une extrémité est reliée à la base du corps de pointeau 31, et dont la rotation modifie la position axiale du pointeau 25.

Le tube extrémal 22 portant l'ouverture O comporte une base formant une liaison rotule formant une articulation de l'ouverture par rapport à un support fixe 41. Un mécanisme d'orientation 43, par exemple sous forme de cardans suspendus à inclinaison contrôlée, permet de changer son orientation pour diriger le flux d'air en différents points de l'habitacle, tandis que la conduite d'air 17 et donc le module de gestion thermique 101 restent fixes.

Au moins un moteur d'orientation 45 (figure 6), est relié au mécanisme d'orientation 43, et modifie, lorsqu'actionné, l'inclinaison relative du tube extrémal 22 et de l'ouverture O par rapport à l'arrivée d'air 17 et au support fixe 41.

En particulier, deux moteurs d'orientation 45 (un seul est visible en figure 6) ayant un mécanisme d'orientation 43 associé peuvent servir à incliner l'aérateur 11 dans des directions orthogonales (flèches pointillées en figure 6), de sorte à pouvoir diriger le flux d'air dans un cône couvrant une partie de l'habitacle.

L'aérateur 11 présente avantageusement un débattement vertical de 30 à 40°, de sorte à pouvoir diriger le flux d'air du sommet du crâne au bassin de l'occupant U du véhicule. Dans le cadre d'un système de gestion thermique 100 à plusieurs modules 101, un débattement horizontal de 10 à 20° suffit pour balayer la largeur du corps de l'occupant U du véhicule.

Les moteurs de translation du pointeau 39 et d'orientation de l'aérateur 45 sont en particulier des moteurs rotatifs électriques pas-à-pas ("steppers" en anglais), actionnés par l'unité de contrôle 105 par injection contrôlée de courant, par exemple sous forme de créneaux de fréquence et de durée variable.

Les figures 7 à 12 illustrent différentes positions relatives notables du pointeau 25 par rapport à l'ouverture O. Les figures 7 à 12 sont des vues en coupe longitudinales de la partie avant (vers l'ouverture) de l'aérateur 11.

En figure 7, le pointeau 25 est en position extrémale déployée, comme précédemment décrit. Le flux d'air (représenté par des lignes fines parallèles) sort par l'ouverture O entre la surface de guidage S et la base évasée 33, sous forme de flux conique. Le flux laminaire est guidé par la surface de guidage S et la base évasée 33, et forme un cône laminaire large, de vitesse moyenne réduite.

Cette position du pointeau produit un flux large, d'intensité moyenne et de portée de l'ordre de plusieurs dizaines de centimètres. Ce flux est par exemple indiqué pour les bras ou le torse d'un occupant du véhicule.

En figure 8, le pointeau 25 est ramené vers l'intérieur en comparaison avec la figure 7. La portion la plus large du pointeau 25 est toujours en aval de l'ouverture O mais est plus proche de ladite ouverture O.

Le flux est toujours laminaire et guidé par la surface de guidage S et la base évasée 33, mais émis sur une section réduite (lignes fines plus proches), et la vitesse moyenne de l'air dans le flux est en conséquence plus élevée à débit constant.

Cette position de flux divergent fin produit un flux indiqué pour le torse ou le bassin d'un utilisateur, et présente une portée plus élevée que le flux large produit par la position extrémale déployée.

En figure 9, le pointeau 25 est encore plus ramené vers l'intérieur, et la portion la plus large est située au niveau axial de l'ouverture O. La section d'ouverture O à travers laquelle le flux d'air passe est alors réduite et en particulier crée un nombre de Reynolds élevé. Le flux d'air est annulaire divergent (lignes en faisceau), mais devient, après quelques centimètres à quelques dizaines de centimètres, turbulent dans une bulle (en aval de la portion de cercle représentée).

Cette position de flux conique turbulent produit un flux de relativement courte portée indiqué pour le visage de l'occupant du fait de l'absence de lignes de flux laminaire de grande vitesse, qui peuvent être désagréables voire aveuglantes lorsqu'elles sont dirigées vers les yeux.

En figure 10, la portion la plus large de la tête de pointeau 27 est située juste en amont de l'ouverture O, notamment plus proche de ladite ouverture O qu'en position extrémale rétractée (figure 11). Le flux d'air est alors laminaire, fin, de vitesse moyenne élevée pour un débit donné.

Le flux d'air laminaire est en particulier guidé par la pointe 29 du pointeau 25, et est convergent, ou du moins faiblement divergent, ce qui est représenté par les lignes de flux parallèles en aval de la pointe 29, parallèles au bord de la pointe 29 à la hauteur de celle-ci.

Le flux d'air généré par cette position de flux convergent fin est de vitesse élevée et de portée longue, et reste en particulier concentré et intense sur les longueurs typiques dans l'habitacle. Il est particulièrement indiqué pour refroidir des parties du corps particulièrement chaudes et éloignées, par exemple une main dénudée.

L'unité de contrôle 105 contrôle en particulier le moteur de translation du pointeau 39 de sorte à faire basculer le pointeau 25 entre les positions précédemment décrites, et éventuellement des positions intermédiaires (flux d'air plus ou moins fins).

Un exemple de procédé de commande 200 relativement peu complexe d'un système de gestion thermique 100 tel que précédemment décrit est schématiquement représenté en figure 12, sous forme d'organigramme linéaire.

La première étape 201 est une étape de détection de la position de la tête d'un occupant du véhicule, notamment en utilisant les capteurs 1 (reconnaissance de visage dans les images par exemple).

La deuxième étape 202 est une étape d'estimation de la position des différentes parties du corps de l'occupant U à partir de la position de la tête, et de tables de proportion du corps humain, et le calcul d'un cycle de ventilation couvrant toute la partie supérieure (tête, torse, abdomen) du corps de l'occupant U avec une forme de flux adaptée pour chaque partie du corps.

La troisième étape 203 est l'étape d'actionnement des moteurs d'orientation de l'aérateur 45 et de translation du pointeau 39. Le moteur d'orientation de l'aérateur 45 est actionné de sorte à faire osciller l'orientation de l'aérateur 11 entre une position supérieure où le flux d'air est orienté vers la tête de l'occupant U et une position inférieure, dans laquelle le flux d'air est orienté vers le torse ou le bassin de l'occupant U.

Au cours d'un cycle d'oscillation de l'aérateur 11, le moteur de translation du pointeau 39 est actionné pour adapter la forme du flux d'air à la partie du corps sur laquelle l'aérateur est pointé.

Les dimensions et positions approximatives des parties du corps de l'occupant U peuvent notamment être estimées ou calculées par l'unité de contrôle 105 à partir d'images de l'habitacle prise par des caméras intégrées dans le module de détection 103 pour une meilleure adaptation de la forme du flux d'air aux parties du corps. Le procédé 200 comporte alors une étape d'adaptation de la puissance et/ou de la forme du flux d'air à la portion du corps vers laquelle le flux est orienté.

Le pointeau 25 est par exemple en position de flux conique turbulent (figure 9) sur le visage et la tête, puis en flux convergent fin (figure 10) ou en position extrémale rétractée (figure 11) sur le cou et les épaules, et en flux divergent fin (figure 8) ou en position extrémale déployée (figure 7) sur le torse et l'abdomen.

Le débit et la finesse du flux peuvent en particulier être adaptés à une consigne sélectionnée par l'occupant (interface à sélecteur de puissance) et adaptés par l'unité de contrôle 105 à une température intérieure détectée, voire à la température mesurée de parties exposées du corps de l'occupant U au moyen des capteurs 1.

Le procédé 200 peut notamment être répété de façon cyclique pour suivre les mouvements de l'occupant U dans l'habitacle.

Pour une personnalisation et une adaptation plus fine du procédé de commande 200 et de la sensation de fraîcheur (ou de chaleur) procurée, les capteurs peuvent notamment capter une ou plusieurs grandeurs relatives à l'état thermique de l'occupant pour établir un profil thermique de l'utilisateur, comprenant par exemple la position, la taille et la température d'une ou plusieurs parties du corps de l'occupant U qui se présentent sous forme de points chauds, tels que les mains et le visage de l'occupant U, dont la taille et la position sont alors estimés.

Dans une grande oscillation verticale ou diagonale de la tête à l'abdomen ou les jambes de l'occupant U, qui couvre généralement un angle de l'ordre de 20 à 40° (généralement de l'ordre de 30°) l'unité de contrôle 105 prévoit alors un nombre prédéterminé d'oscillations d'angle réduit au niveau des points chauds détectés.

Par exemple trois à cinq oscillations sont effectuées dans un angle de 5° à hauteur du visage, avec le pointeau 25 en position de flux conique turbulent, puis plus bas dans la grande oscillation haut/bas, au niveau de la position angulaire où le flux d'air est dirigé vers les mains (généralement au niveau du volant) de nouvelles oscillations réduites de 3 à 5° sont effectuées avec le pointeau 25 en position de flux convergent fin ou en position extrémale rétractée.

Entre les points chauds, le pointeau 25 est en particulier en position de flux divergent fin ou en position extrémale déployée. Entre les points chauds, des parcours plus complexes tels que des "zigzags" ou vaguelettes ou bien des cercles plus grands peuvent être décrits.

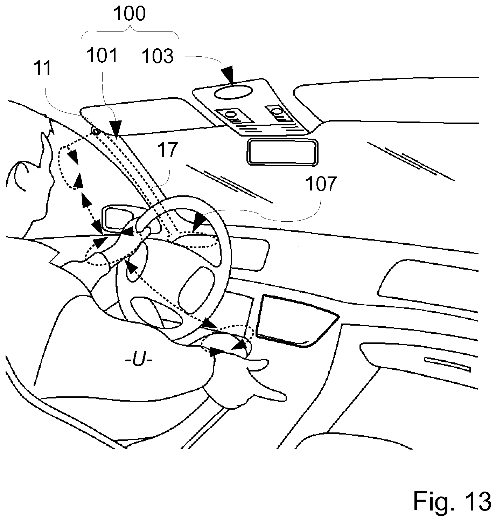

La figure 13 est une vue d'intérieur d'habitacle semblable à celle de la figure 1. Dans le mode de réalisation représenté, le module de gestion thermique 101 comporte un aérateur 11, et une conduite d'air 17 reliant l'aérateur 11 au système de gestion thermique du véhicule 107. Le flux d'air refroidi ou réchauffé est alors initialement produit par un compresseur et une ventilation tels qu'usuellement implémentés dans les véhicules, et un simple système de déflecteurs et clapets peut distribuer le flux d'air entre l'aérateur 11 et des sorties d'air usuelles réparties dans l'habitacle et réalisées sous forme de grilles.

La direction principale du flux d'air et son parcours dans l'habitacle sont représentés en flèches pointillées. En particulier, l'orientation du flux d'air se fait ici dans deux directions orthogonales (haut/bas et gauche/droite)

En partant du haut, le flux d'air est initialement dirigé vers la tête et le visage de l'utilisateur, en position haute et centrale où une première oscillation circulaire est réalisée, par exemple avec un flux d'air conique turbulent, le visage étant assez proche de l'aérateur pour que l'effet thermique soit ressenti.

Le flux d'air est, après un nombre prédéterminé d'oscillations circulaires, dirigé progressivement vers le bas, en direction du cou avec un flux convergent fin ou large, et le torse avec un flux divergent fin ou large, puis il est pointé vers la main gauche de l'occupant U, où un deuxième cycle d'oscillations circulaires réduites est exécuté, avec un flux d'air convergent large (position extrémale rétractée du pointeau 25, figure 11).

Le flux d'air est alors dirigé vers la main droite, qui est ici en train d'interagir avec une interface au niveau de la console centrale du véhicule, et est en conséquence plus éloignée. Un troisième cycle d'oscillations circulaires réduites est alors exécuté, avec un flux d'air convergent fin (position de la figure 10).

Le système de gestion thermique 100 selon l'invention permet ainsi de générer une "bulle" de fraîcheur ou de chaleur ressentie autour du corps des occupants *U*, et en particulier de procurer rapidement une sensation de fraîcheur ou de chaleur en ciblant les parties du corps telles que les mains et la tête, qui sont généralement exposées et fortement vascularisées.

En utilisant un module de gestion thermique 103 dédié, avec une inertie thermique moins importante, la vitesse de génération d'un flux d'air est encore réduite, tout en permettant une économie d'énergie.

L'aérateur 11 et l'éventuel module de gestion thermique 103 associé peuvent être substitués ou associés à des dispositifs de gestion thermique du véhicule. Lesdits dispositifs de gestion thermique peuvent alors fonctionner en parallèle des modules de gestion thermique 103 selon l'invention, et/ou prendre le relai progressivement lorsqu'ils atteignent une température de flux d'air suffisamment basse ou élevée.

Le procédé de commande 200 et ses dérivés plus complexes utilisant un profil thermique individuel pour chacun des occupants U permet d'adapter la bulle de fraîcheur ou de chaleur à la morphologie et la position de chacun, et un refroidissement ou réchauffement ciblé est effectué sur les parties du corps exposées et fortement vascularisées (main et tête), tout en suivant leurs mouvements.

## Revendications

1. Aérateur d'habitacle de véhicule automobile, destiné à délivrer un flux d'air en direction d'un espace à conditionner, comportant:
• une ouverture (*O*), par laquelle peut s'écouler un flux d'air lors du fonctionnement,
• une surface de guidage (S) évasée, s'étendant à partir de l'ouverture (*O*), évasée dans la direction d'écoulement du flux d'air,
• un pointeau (25) comportant une tête de pointeau (27) avec :
▪ une pointe (29) située à l'extrémité du pointeau (25),
▪ une portion de largeur maximale de forme correspondante à l'ouverture (*O*), avec des dimensions comprises entre 80% et 100% de celles de l'ouverture (*O*),
▪ une base évasée (33) dans le sens d'écoulement reliant la tête du pointeau (27) à un corps allongé (31),
le pointeau (25) étant mobile en translation entre deux positions extrémales dont :
▪ une position extrémale déployée dans laquelle la portion la plus large de la tête pointeau (27) est en aval de l'ouverture (*O*) en direction de l'espace à conditionner, le flux d'air étant alors laminaire et guidé par la surface de guidage (S) en flux divergent,
▪ une position extrémale rétractée,
caractérisé en ce,
dans la position extrémale rétractée la portion la plus large de la tête du pointeau (27) est en amont de l'ouverture (*O*), le flux d'air étant alors laminaire et guidé par la pointe (29) du pointeau (25) en flux convergent.

2. Aérateur selon la revendication 1, **caractérisé en ce qu'**il comporte une conduite d'air (17), fixe par rapport à l'espace à conditionner et par laquelle arrive de l'air conditionné, et **en ce qu'**il comporte une articulation permettant d'incliner l'ouverture (*O*) et le pointeau (25) par rapport à la conduite d'air (17).

3. Aérateur selon la revendication précédente, **caractérisé en ce qu'**il comporte en outre :
• un mécanisme d'orientation (43) contrôlant l'articulation entre la conduite d'air (17) et l'ouverture (*O*),
• un moteur d'orientation (45), relié au mécanisme d'orientation (43), modifiant, lorsqu'actionné, l'inclinaison relative de l'ouverture (*O*) par rapport à la conduite d'air (17).

4. Aérateur selon l'une des revendications précédentes, **caractérisé en ce qu'**il comporte en outre :
• un mécanisme de translation du pointeau (35, 37), contrôlant la translation du pointeau (25) entre ses positions extrémales,
• un moteur de translation du pointeau (39) relié au mécanisme de translation du pointeau (34, 37), modifiant, lorsqu'actionné, la position en translation du pointeau (25).

5. Module de gestion thermique de véhicule automobile comportant :
• une conduite d'air (17), reliée à un système de gestion thermique (107) du véhicule, dans laquelle ledit système de gestion thermique (107) émet un flux d'air conditionné,
• un aérateur (11) selon l'une des revendications précédentes, disposé à l'extrémité de la conduite d'air (17) et par lequel le flux d'air conditionné est émis en direction d'un habitacle du véhicule.

6. Module de gestion thermique de véhicule automobile comportant :
• une soufflerie (7), créant, lorsqu'activée, un flux d'air dans une conduite d'air (17) et comportant une entrée d'air à partir de laquelle de l'air formant le flux d'air est prélevé,
• un conditionneur thermique (9), disposé au niveau de la conduite d'air (17) pour le conditionnement thermique du flux d'air généré par la soufflerie (7),
• un aérateur (11) selon l'une des revendications 1 à 4, disposé à l'extrémité de la conduite d'air (17) par lequel le flux d'air conditionné est émis en direction d'un habitacle du véhicule.

7. Module de gestion thermique selon l'une des revendications 5 à 6, **caractérisé en ce qu'**il comporte en outre :
• un mécanisme d'orientation de l'aérateur (43), contrôlant une articulation entre la conduite d'air (17) et l'aérateur (11),
• au moins un moteur d'orientation de l'aérateur (45), dont l'actionnement modifie l'orientation de l'aérateur (11) par rapport à la conduite d'air (17),
• un mécanisme de translation du pointeau (35, 37), contrôlant la translation du pointeau (25) entre ses positions extrémales,
• un moteur de translation du pointeau (39) relié au mécanisme de translation du pointeau (35, 37), modifiant, lorsqu'actionné, la position en translation du pointeau (25),
• une unité de contrôle (105) contrôlant l'actionnement des moteurs d'orientation de l'aérateur (45) et de translation du pointeau (39).

8. Système de gestion thermique de véhicule automobile comportant :
• au moins un module de gestion thermique (103) selon la revendication 7,
• au moins un capteur (1) d'une grandeur relative à un état thermique d'au moins une partie du corps d'un occupant (*U*) du véhicule,
• une unité de contrôle (105), reliée à l'au moins un capteur (1), contrôlant :
▪ la soufflerie (7) pour modifier le débit du flux d'air,
▪ le conditionneur thermique (9) pour modifier la température du flux d'air,
▪ le moteur d'orientation de l'aérateur (45) pour modifier l'orientation du flux d'air et
▪ le moteur de translation du pointeau (39) pour modifier la forme du flux d'air émis,
afin de générer et diriger un flux d'air avec un débit et une forme de flux adaptés en fonction de la au moins une grandeur estimée par le capteur (1).

9. Système de gestion thermique selon la revendication 8, **caractérisé en ce que** l'unité de contrôle (105) actionne le moteur de translation du pointeau (39) pour pouvoir basculer le pointeau (25) entre différentes positions intermédiaires entre les positions extrémales comportant au moins une parmi les suivantes :
• une position de flux divergent fin, où le pointeau (25) est rétracté par rapport à la position extrémale, dans laquelle la portion la plus large de la tête de pointeau (27) est en aval de l'ouverture (*O*),
• une position de flux conique turbulent, dans laquelle la portion la plus large de la tête de pointeau (27) est au niveau longitudinal de l'ouverture (*O*),
• une position de flux convergent fin, où le pointeau (25) est situé en direction de la position extrémale déployée par rapport à la position extrémale rétractée et dans laquelle la portion la plus large de la tête de pointeau (27) est en amont de l'ouverture (*O*).

10. Système de gestion thermique selon l'une des revendication 8 à 9, **caractérisé en ce que** l'unité de contrôle (105) est configurée pour générer un profil thermique de l'occupant (*U*) et pour actionner la soufflerie (7), le conditionneur thermique (9), les moteurs d'orientation de l'aérateur (45) et/ou de translation du pointeau (39) en fonction du profil thermique généré, le profil thermique comprenant au moins un paramètre ou grandeur parmi les suivants : la présence d'au moins un occupant, la position du au moins un occupant, la taille du ou des occupants (U), la position de parties du corps du au moins un occupant (U), la température de parties du corps du au moins un occupant (U), la température en différents points de l'habitacle, la présence de rayonnement solaire incident dans l'habitacle ou sur au moins une partie du corps du au moins un occupant (U), la température extérieure, l'état ouvert ou fermé d'ouvrants ou de fenêtres du véhicule, la position du siège d'au moins un occupant (U).

11. Procédé de commande de système de gestion thermique de véhicule automobile selon l'une des revendications 8 à 10, comportant les étapes :
• détection de la position de la tête d'un occupant (*U*) du véhicule,
• actionnement du moteur d'orientation de l'aérateur (45) pour faire osciller l'orientation de l'aérateur (11) entre une position supérieure où le flux d'air est orienté vers la tête de l'occupant (*U*) et une position inférieure, dans laquelle le flux d'air est orienté vers le torse ou le bassin de l'occupant (U).

12. Procédé de commande de système de gestion thermique de véhicule automobile selon la revendication 11, comportant les étapes :
• prélèvement d'images à partir d'une caméra infra-rouge et/ou collecte de données à partir des capteurs (1),
• génération d'un profil thermique d'un occupant du véhicule au moyen des images de la caméra thermique et des données des capteurs (1),
• détection de points chauds dans le profil thermique de l'occupant (*U*) du véhicule,
• actionnement du moteur d'orientation de l'aérateur (45) pour décrire des oscillations réduites autour des points chauds détectés avec le pointeau (25) dans une position rétractée où la portion la plus large de la tête de pointeau (27) est en amont de l'ouverture (*O*) pour générer un flux d'air convergent.

## Patentansprüche

1. Luftausströmer für einen Kraftfahrzeuginnenraum zur Ausgabe eines Luftstroms in Richtung eines zu klimatisierenden Raums, aufweisend:
• eine Öffnung (*O*), durch welche während des Betriebs ein Luftstrom strömen kann,
• eine aufgeweitete Leitfläche (S), die sich von der Öffnung (*O*) erstreckt, die in der Strömungsrichtung des Luftstroms aufgeweitet ist,
• einen Dorn (25), der einen Dornkopf (27) aufweist, mit:
▪ einer Spitze (29), die sich am Ende des Dorns (25) befindet,
▪ einem Teilbereich maximaler Breite, der entsprechend der Öffnung (*O*) geformt ist, mit Abmessungen zwischen 80 % und 100 % von jenen der Öffnung (*O*),
▪ einer in der Strömungsrichtung aufgeweiteten Basis (33), die den Kopf des Dorns (27) mit einem langgestreckten Körper (31) verbindet,
wobei der Dorn (25) zwischen zwei extremalen Positionen verschiebbar ist, davon:
▪ eine ausgefahrene extremale Position, in der sich der größte Teilbereich des Dornkopfes (27) stromab der Öffnung (*O*) in Richtung des zu klimatisierenden Raums befindet, wobei der Luftstrom dann laminar ist und von der Leitfläche (S) in einen auseinanderlaufenden Strom geleitet wird,
▪ eine eingefahrene extremale Position, **dadurch gekennzeichnet, dass** sich in der eingefahrenen extremalen Position der größte Teilbereich des Kopfes des Dorns (27) stromauf der Öffnung (*O*) befindet, wobei der Luftstrom dann laminar ist und von der Spitze (29) des Dorns (25) in einen zusammenlaufenden Strom geleitet wird.

2. Luftausströmer nach Anspruch 1, **dadurch gekennzeichnet, dass** er einen Luftkanal (17) aufweist, der im Verhältnis zu dem zu klimatisierenden Raum fest ist und durch den klimatisierte Luft ankommt, und dadurch, dass er ein Gelenk aufweist, mit dem die Öffnung (*O*) und der Dorn (25) im Verhältnis zum Luftkanal (17) geneigt werden können.

3. Luftausströmer nach dem vorhergehenden Anspruch, **dadurch gekennzeichnet, dass** er ferner Folgendes aufweist:
• einen Orientierungsmechanismus (43), der das Gelenk zwischen dem Luftkanal (17) und der Öffnung (*O*) steuert,
• einen Orientierungsmotor (45), der an den Orientierungsmechanismus (43) angeschlossen ist, der bei Betätigung die relative Neigung der Öffnung (*O*) im Verhältnis zum Luftkanal (17) ändert.

4. Luftausströmer nach einem der vorhergehenden Ansprüche, **dadurch gekennzeichnet, dass** er ferner Folgendes aufweist:
• einen Mechanismus zur Verschiebung des Dorns (35, 37), der die Verschiebung des Dorns (25) zwischen dessen extremalen Positionen steuert,
• einen Motor zur Verschiebung des Dorns (39), der an den Mechanismus zur Verschiebung des Dorns (34, 37) angeschlossen ist, der bei Betätigung die Verschiebungsposition des Dorns (25) steuert.

5. Wärmemanagementmodul eines Kraftfahrzeugs, aufweisend:
• einen Luftkanal (17), der an ein Wärmemanagementsystem (107) des Fahrzeugs angeschlossen ist, wobei das Wärmemanagementsystem (107) einen klimatisierten Luftstrom abgibt,
• einen Luftausströmer (11) nach einem der vorhergehenden Ansprüche, der am Ende des Luftkanals (17) angeordnet ist und durch den der klimatisierte Luftstrom in Richtung eines Innenraums des Fahrzeugs abgegeben wird.

6. Wärmemanagementmodul eines Kraftfahrzeugs, aufweisend:
• ein Gebläse (7), das im aktivierten Zustand einen Luftstrom in einem Luftkanal (17) erzeugt und einen Lufteinlass aufweist, aus dem Luft entnommen wird, die den Luftstrom bildet,
• eine Klimatisierungseinrichtung (9), die am Luftkanal (17) angeordnet ist, zur Klimatisierung des Luftstroms, der vom Gebläse (7) erzeugt wird,
• einen Luftausströmer (11) nach einem der Ansprüche 1 bis 4, der am Ende des Luftkanals (17) angeordnet ist, durch den der klimatisierte Luftstrom in Richtung eines Innenraums des Fahrzeugs abgegeben wird.

7. Wärmemanagementmodul nach einem der Ansprüche 5 bis 6, **dadurch gekennzeichnet, dass** es ferner Folgendes aufweist:
• einen Mechanismus zur Orientierung des Luftausströmers (43), der ein Gelenk zwischen dem Luftkanal (17) und dem Luftausströmer (11) steuert,
• wenigstens einen Motor zur Orientierung des Luftausströmers (45), dessen Betätigung die Orientierung des Luftausströmers (11) im Verhältnis zum Luftkanal (17) ändert,
• einen Mechanismus zur Verschiebung des Dorns (35, 37), der die Verschiebung des Dorns (25) zwischen dessen extremalen Positionen steuert,
• einen Motor zur Verschiebung des Dorns (39), der an den Mechanismus zur Verschiebung des Dorns (35, 37) angeschlossen ist, der bei Betätigung die Verschiebungsposition des Dorns (25) steuert,
• eine Steuereinheit (105), die die Betätigung der Motoren zur Orientierung des Luftausströmers (45) und zur Verschiebung des Dorns (39) steuert.

8. Wärmemanagementsystem eines Kraftfahrzeugs, aufweisend:
• wenigstens ein Wärmemanagementmodul (103) nach Anspruch 7,
• wenigstens einen Sensor (1) für eine Größe in Bezug auf einen thermischen Zustand wenigstens eines Körperteils eines Insassen (U) des Fahrzeugs,
• eine Steuereinheit (105), die an den wenigstens einen Sensor (1) angeschlossen ist, wobei sie Folgendes steuert:
▪ das Gebläse (7), um den Durchsatz des Luftstroms zu ändern,
▪ die Klimatisierungseinrichtung (9), um die Temperatur des Luftstroms zu ändern,
▪ den Motor zur Orientierung des Luftausströmers (45), um die Orientierung des Luftstroms zu ändern, und
▪ den Motor zur Verschiebung des Dorns (39), um die Form des abgegebenen Luftstroms zu ändern,
um einen Luftstrom mit einem Durchsatz und einer Stromform zu erzeugen und zu lenken, die je nach der wenigstens einen Größe angepasst sind, die vom Sensor (1) geschätzt wird.

9. Wärmemanagementsystem nach Anspruch 8, **dadurch gekennzeichnet, dass** die Steuereinheit (105) den Motor zur Verschiebung des Dorns (39) betätigt, um den Dorn (25) zwischen verschiedenen Zwischenpositionen zwischen den extremalen Positionen kippen zu können, die wenigstens eine der folgenden umfassen:
• eine Position eines dünnen auseinanderlaufenden Stroms, wo der Dorn (25) im Verhältnis zur extremalen Position eingefahren ist, in welcher sich der größte Teilbereich des Dornkopfes (27) stromab der Öffnung (*O*) befindet,
• eine Position eines turbulenten kegelförmigen Stroms, in welcher sich der größte Teilbereich des Dornkopfes (27) im Längsbereich der Öffnung (*O*) befindet,
• eine Position eines dünnen zusammenlaufenden Stroms, wo sich der Dorn (25) in Richtung der ausgefahrenen extremalen Position im Verhältnis zur eingefahrenen extremalen Position befindet und in welcher sich der größte Teilbereich des Dornkopfes (27) stromauf der Öffnung (*O*) befindet.

10. Wärmemanagementsystem nach einem der Ansprüche 8 bis 9, **dadurch gekennzeichnet, dass** die Steuereinheit (105) dazu ausgebildet ist, eine Wärmeprofil des Insassen (U) zu erzeugen und das Gebläse (7), die Klimatisierungseinrichtung (9), die Motoren zur Orientierung des Luftausströmers (45) und/oder zur Verschiebung des Dorns (39) je nach dem erzeugten Wärmeprofil zu betätigen, wobei das Wärmeprofil wenigstens einen Parameter oder eine Größe der folgenden umfasst: das Vorhandensein wenigstens eines Insassen, die Position des wenigstens einen Insassen, die Größe des oder der Insassen (U), die Position von Körperteilen des wenigstens einen Insassen *(U),* die Temperatur von Körperteilen des wenigstens einen Insassen *(U),* die Temperatur an verschiedenen Punkten des Fahrzeuginnenraums, das Vorhandensein von einfallender Sonnenstrahlung im Fahrzeuginnenraum oder auf wenigstens einem Körperteil des wenigstens einen Insassen (U), die Außentemperatur, den offenen oder geschlossenen Zustand von Öffnungen oder Fenstern des Fahrzeugs, die Position des Sitzes wenigstens eines Insassen (U).

11. Verfahren zur Steuerung eines Wärmemanagementsystems eines Kraftfahrzeugs nach einem der Ansprüche 8 bis 10, aufweisend die Schritte:
• Detektieren der Position des Kopfes eines Insassen (U) des Fahrzeugs,
• Betätigung des Motors zur Orientierung des Luftausströmers (45), um die Orientierung des Luftausströmers (11) zwischen einer oberen Position, wo der Luftstrom zum Kopf des Insassen (U) orientiert ist, und einer unteren Position, in welcher der Luftstrom zum Oberkörper oder Becken des Insassen (U) orientiert ist, hin- und herwechseln zu lassen.

12. Verfahren zur Steuerung eines Wärmemanagementsystems eines Kraftfahrzeugs nach Anspruch 11, aufweisend die Schritte:
• Aufzeichnen von Bildern mit einer Infrarotkamera und/oder Erfassen von Daten mit den Sensoren (1),
• Erzeugen eines Wärmeprofils eines Insassen des Fahrzeugs mittels der Bilder der Wärmebildkamera und der Daten der Sensoren (1),
• Detektieren von Hotspots im Wärmeprofil des Insassen (U) des Fahrzeugs,
• Betätigen des Motors zur Orientierung des Luftausströmers (45), um verringerte Schwenkbewegungen um detektierte Hotspots mit dem Dorn (25) in einer eingefahrenen Position zu beschreiben, wo sich der größte Teilbereich des Dornkopfes (27) stromauf der Öffnung (*O*) befindet, um einen zusammenlaufenden Luftstrom zu erzeugen.

## Claims

1. Motor vehicle interior vent intended to deliver a flow of air in the direction of a space to be conditioned, having:
• an opening (*O*), through which a flow of air can flow during operation,
• a flared guide surface (*S*), extending from the opening (*O*) and flared in the direction of flow of the flow of air,
• a needle valve (25) having a needle valve head (27) with:
▪ a tip (29) situated at the end of the needle valve (25),
▪ a portion of maximum width with a shape corresponding to the opening (*O*), with dimensions of between 80% and 100% of those of the opening (*O*),
▪ a flared base (33) in the direction of flow connecting the needle valve head (27) to an elongate body (31),
the needle valve (25) being movable in translation between two end positions, namely:
▪ a deployed end position in which the widest portion of the needle valve head (27) is downstream of the opening (*O*) in the direction of the space to be conditioned, the flow of air then being laminar and guided by the guide surface (S) in a divergent flow,
▪ a retracted end position,
**characterized in that**
in the retracted end position the widest portion of the needle valve head (27) is upstream of the opening (*O*), the flow of air then being laminar and guided by the tip (29) of the needle valve (25) in a convergent flow.

2. Vent according to Claim 1, **characterized in that** it has an air pipe (17), which is fixed with respect to the space to be conditioned and through which conditioned air arrives, and **in that** it has an articulation for inclining the opening (*O*) and the needle valve (25) with respect to the air pipe (17) .

3. Vent according to the preceding claim, **characterized in that** it also has:
• an orientation mechanism (43) which controls the articulation between the air pipe (17) and the opening (*O*),
• an orientation motor (45), which is connected to the orientation mechanism (43) and, when actuated, modifies the relative inclination of the opening (*O*) with respect to the air pipe (17) .

4. Vent according to one of the preceding claims, **characterized in that** it also has:
• a mechanism (35, 37) for moving the needle valve in translation, controlling the movement of the needle valve (25) in translation between its end positions,
• a motor (39) for moving the needle valve in translation, which is connected to the mechanism (34, 37) for moving the needle valve in translation and, when actuated, modifies the translational position of the needle valve (25).

5. Motor vehicle heat control module having:
• an air pipe (17) connected to a heat control system (107) of the vehicle, in which said heat control system (107) outputs a flow of conditioned air,
• a vent (11) according to one of the preceding claims, which is disposed at the end of the air pipe (17) and through which the flow of conditioned air is output in the direction of an interior of the vehicle.

6. Motor vehicle heat control module having:
• a blower (7) which, when activated, creates a flow of air in an air pipe (17) and has an air inlet from which air forming the flow of air is drawn in,
• a thermal conditioner (9) disposed in the region of the air pipe (17) for thermally conditioning the flow of air generated by the blower (7),
• a vent (11) according to one of Claims 1 to 4, which is disposed at the end of the air pipe (17) and through which the flow of conditioned air is output in the direction of an interior of the vehicle.

7. Heat control module according to either of Claims 5 and 6, **characterized in that** it also has:
• a vent orientation mechanism (43) which controls an articulation between the air pipe (17) and the vent (11),
• at least one vent orientation motor (45), the actuation of which modifies the orientation of the vent (11) with respect to the air pipe (17),
• a mechanism (35, 37) for moving the needle valve in translation, controlling the movement of the needle valve (25) in translation between its end positions,
• a motor (39) for moving the needle valve in translation, which is connected to the mechanism (35, 37) for moving the needle valve in translation and, when actuated, modifies the translational position of the needle valve (25),
• a control unit (105) which controls the actuation of the vent orientation motor (45) and the motor (39) for moving the needle valve in translation.

8. Motor vehicle heat control system having:
• at least one heat control module (103) according to Claim 7,
• at least one sensor (1) for sensing a variable relating to a thermal state of at least a part of the body of an occupant (U) of the vehicle,
• a control unit (105), which is connected to the at least one sensor (1) and controls:
▪ the blower (7) in order to modify the flow rate of the flow of air,
▪ the thermal conditioner (9) in order to modify the temperature of the flow of air,
▪ the vent orientation motor (45) in order to modify the orientation of the flow of air, and
▪ the motor (39) for moving the needle valve in translation in order to modify the shape of the flow of air output,
in order to generate and direct a flow of air with a flow rate and a shape of flow that are adapted depending on the at least one variable estimated by the sensor (1) .

9. Heat management system according to Claim 8, **characterized in that** the control unit (105) actuates the motor (39) for moving the needle valve in translation in order for it to be possible to pivot the needle valve (25) between different intermediate positions between the end positions, comprising at least one of the following:
• a narrow divergent flow position, in which the needle valve (25) is retracted with respect to the end position, in which the widest portion of the needle valve head (27) is downstream of the opening (*O*),
• a turbulent conical flow position, in which the widest portion of the needle valve head (27) is at the longitudinal level of the opening (*O*),
• a narrow convergent flow position, in which the needle valve (25) is situated in the direction of the deployed end position with respect to the retracted end position, and in which the widest portion of the needle valve head (27) is upstream of the opening (*O*).

10. Heat control system according to either of Claims 8 and 9, **characterized in that** the control unit (105) is configured to generate a thermal profile of the occupant (U) and to actuate the blower (7), the thermal conditioner (9), the vent orientation motor (45) and/or the motor (39) for moving the needle valve in translation depending on the thermal profile generated, the thermal profile comprising at least one parameter or variable from the following: the presence of at least one occupant, the position of the at least one occupant, the size of the occupant(s) (U), the position of parts of the body of the at least one occupant (*U*), the temperature of parts of the body of the at least one occupant (*U*), the temperature at different points in the vehicle interior, the presence of incident solar radiation in the vehicle interior or on at least a part of the body of the at least one occupant (*U*), the outside temperature, the open or closed state of opening members or windows of the vehicle, the position of the seat of the at least one occupant (U) .

11. Method for controlling the motor vehicle heat control system according to one of Claims 8 to 10, having the steps of:
• detecting the position of the head of an occupant (U) of the vehicle,
• actuating the vent orientation motor (45) in order to oscillate the orientation of the vent (11) between an upper position in which the flow of air is oriented towards the head of the occupant (U) and a lower position in which the flow of air is oriented towards the torso or the pelvis of the occupant (U).

12. Method for controlling the motor vehicle heat control system according to Claim 11, having the steps of:
• capturing images from an infrared camera and/or collecting data from the sensors (1),
• generating a thermal profile of an occupant of the vehicle by means of the images from the thermal camera and the data from the sensors (1),
• detecting hotspots in the thermal profile of the occupant (U) of the vehicle,
• actuating the vent orientation motor (45) in order to describe smaller oscillations about the detected hotspots with the needle valve (25) in a retracted position in which the widest portion of the needle valve head (27) is upstream of the opening (*O*) in order to generate a convergent flow of air.
